# EUROPEAN PATENT APPLICATION

(11) **EP 4 815 042 A1**
(43) Date of publication of application: **30.09.2026**
(21) Application number: 24893120.6
(22) Date of filing: 22.10.2024
(51) Int. Cl.: H01M 4/13, H01M 4/134, H01M 4/36, H01M 4/62

(54) **NEGATIVE ELECTRODE PLATE AND BATTERY**

(30) Priority: 20.11.2023 CN 202311547601
(71) Applicant: Zhuhai CosMX Battery Co., Ltd., Zhuhai, Guangdong 519180 (CN)
(72) Inventor: GUO, Panlong, Zhuhai, Guangdong 519180 (CN); FAN, Hongsheng, Zhuhai, Guangdong 519180 (CN); LI, Suli, Zhuhai, Guangdong 519180 (CN); CHEN, Weiping, Zhuhai, Guangdong 519180 (CN)
(74) Representative: Murgitroyd & Company
(86) International application number: PCT/CN2024/126317
(87) International publication number: WO 2025/107961

(57) **Abstract**

The present invention relates to the technical field of batteries, and in particular to a negative electrode plate and a battery comprising the negative electrode plate. The negative electrode plate comprises a negative electrode current collector, a first coating on a surface of the negative electrode current collector, and a second coating on the surface of the first coating, wherein the first coating comprises first silicon particles and a coating layer on the surface of the first silicon particles; the coating layer comprises a polymer material, carbon nanotubes, and a first conductive agent; and the ratio R of a centre-to-centre distance of the adjacent particles to a median particle size Dv50 of the first silicon particles is (0.01-100) : 1. The negative electrode plate of the present invention exhibits a low expansion rate and high safety performance, and the battery comprising the negative electrode plate of the present invention exhibits a low expansion rate, high cycling stability, and high safety performance.

## Description

### TECHNICAL FIELD

The present invention relates to the technical field of batteries, and in particular to a negative electrode plate and a battery comprising the negative electrode plate.

### BACKGROUND

Lithium-ion batteries have high energy density and a long cycle life, and are widely used in fields such as consumer electronics and electric vehicles. Driven by the continuous improvement in the energy density of lithium-ion batteries, the average range of new energy vehicles has surged from approximately 100 km in 2013 to over 600 km in 2022. However, the chemical system of the existing lithium-ion batteries has basically reached its limits, making further significant breakthroughs difficult to achieve. The silicon-based negative electrode has an extremely high theoretical capacity (4200 mAh/g for Si, and 2680 mAh/g for SiOₓ), which is much larger than the capacity of the current graphite negative electrode (370 mAh/g). Therefore, completely or partially replacing graphite negative electrodes with silicon-based negative electrodes is the simplest and most effective way to improve the energy density of batteries.

However, silicon-based materials currently still face a series of challenges. The primary technical bottleneck remains how to effectively suppress the volume expansion of the silicon negative electrode. As the silicon negative electrode allows for the intercalation/deintercalation of a higher number of lithium ions during charging and discharging, it causes a massive volumetric expansion-contraction effect, resulting in cracks and even pulverization, and leading to the continuous rupture, repeated reformation and thickening of the SEI film. Meanwhile, it causes the continuous consumption of the electrolyte, ultimately resulting in capacity decay and cycle failure. Especially in the later stages of cycling, the cell thickness seriously exceeds the standard, even leading to safety incidents. Limited by problems such as significant volume expansion and poor cycling stability of the silicon negative electrode, high-energy-density lithium-ion batteries based on the silicon-based negative electrode have not been widely used.

Therefore, it is very important to invent a battery with low expansion rate, high cycling stability and high safety performance.

### SUMMARY

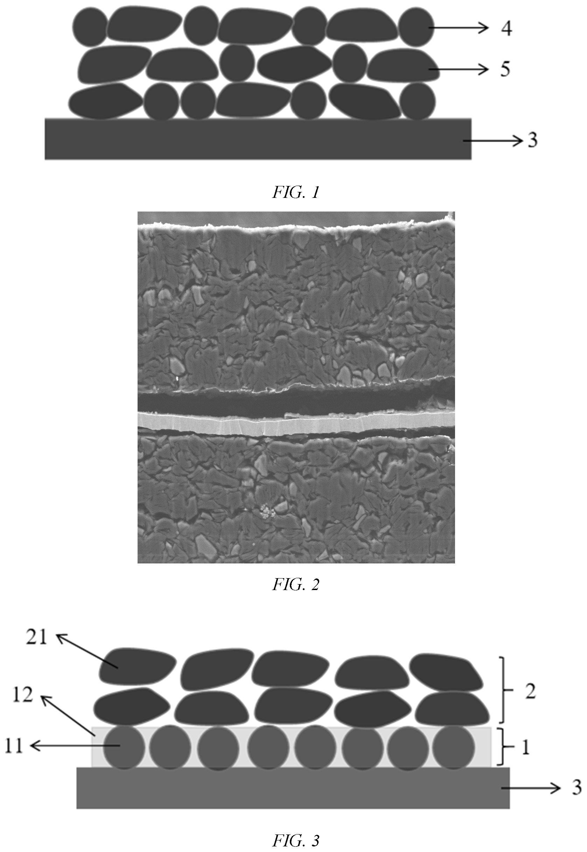

Due to issues such as excessive expansion and low initial Coulombic efficiency of pure silicon systems, it is currently a common practice to construct a negative electrode plate by blending silicon with graphite. As illustrated in FIG. 1 and FIG. 2, graphite and silicon are mixed and then coated on a surface of a negative electrode current collector to form a graphite-silicon blended coating; however, the problem of a high expansion rate still persists. The graphite-silicon blended negative electrode system has several problems at the electrode plate level: 1) insufficient binder distribution on the surface of silicon negative electrode: in the graphite-silicon blended system, the binder distribution on the surface of silicon particles is insufficient, and the adhesion network is susceptible to disruption; 2) continuous enlargement of voids between silicon and graphite particles: due to the substantial difference in the expansion behaviour of silicon and graphite, the silicon and graphite particles with different expansion rates in the graphite-silicon blended system are prone to movement and rearrangement, leading to an increase in inter-particle interstitial voids; and 3) increased frequency of cyclic stretching on the binder: due to the difference in lithium intercalation/deintercalation potentials between graphite and silicon, silicon undergoes lithium intercalation first followed by graphite, causing the binder to experience two distinct stretching events per cycle, thus necessitating higher fatigue resistance. Therefore, current graphite-silicon blended negative electrodes consistently fail to effectively address the problem of the significant volume expansion of silicon.

An object of the present invention is to overcome the above problems existing in the prior art by providing a negative electrode plate and a battery comprising the negative electrode plate. The negative electrode plate of the present invention exhibits a low expansion rate and high safety performance, and the battery comprising the negative electrode plate of the present invention exhibits a low expansion rate, high cycling stability, and high safety performance.

It is found that by improving the uniformity of the binder distribution on the surface of the silicon particles and mitigating the enlargement of inter-particle voids, it is possible to reduce the expansion rate of the negative electrode plate and improve the safety performance of the negative electrode plate, thereby reducing the expansion rate of the battery and improving the cycling stability and safety performance of the battery.

Through further investigation, it is found that in order to improve the uniformity of the binder distribution on the surface of the silicon particles and mitigate the enlargement of inter-particle voids, the adverse effects of the volume changes in silicon particles in the graphite-silicon blended system can be overcome by changing the structure of the negative electrode plate. Through extensive in-depth research, it is discovered a specific structure that can improve the uniformity of the binder distribution on the surface of the silicon particles.

In order to achieve the above object, a first aspect of the present invention provides a negative electrode plate, which comprises a negative electrode current collector, a first coating on the surface of one or both sides of the negative electrode current collector, and a second coating on the surface of the first coating, wherein the first coating comprises first silicon particles and a coating layer on the surface of the first silicon particles; the coating layer comprises a polymer material, carbon nanotubes, and a first conductive agent; and the ratio R of a centre-to-centre distance of the adjacent first silicon particles to a median particle size Dv50 of the first silicon particles is (0.01-100) : 1.

A second aspect of the present invention provides a battery comprising the negative electrode plate of the first aspect of the present invention.

By means of the technical solutions described above, the present invention has at least the following advantages over the prior art:
(1) the negative electrode plate of the present invention has a low expansion rate;
(2) the negative electrode plate of the present invention has high safety performance;
(3) the battery of the present invention has a low expansion rate;
(4) the battery of the present invention has high cycling stability; and
(5) the battery of the present invention has high safety performance.

Other features and advantages of the present invention will be described in detail in the Detailed Description of Embodiments hereinbelow.

The endpoints of ranges and any values disclosed herein are not limited to such exact ranges or values, and these ranges or values should be understood to include values close to these ranges or values. For numerical value ranges, one or more new numerical value ranges can be obtained between endpoint values of various ranges, between endpoint values of various ranges and individual point values, and between individual point values, and these numerical value ranges should be regarded as specifically disclosed herein.

### BRIEF DESCRIPTION OF THE DRAWINGS

FIG. 1 shows a schematic structural view of a graphite-silicon blended negative electrode plate in the prior art (where 3 represents a negative electrode current collector, 4 represents silicon, and 5 represents graphite).
FIG. 2 shows an SEM image of a graphite-silicon blended negative electrode plate in the prior art.
FIG. 3 shows a schematic structural view of the negative electrode plate of the present invention.
FIG. 4 shows an SEM image of a negative electrode plate in an embodiment of the present invention.
FIG. 5 shows an SEM image of a negative electrode plate in another embodiment of the present invention.
FIG. 6 shows a schematic view of an uneven contact surface between the first coating and the second coating of the negative electrode plate of the present invention.
FIG. 7 shows a schematic view of the centre-to-centre distance of adjacent first silicon particles in the cross-section of a negative electrode plate.
FIG. 8 shows a schematic view of the centre-to-centre distance of adjacent first silicon particles in the cross-section of another negative electrode plate.

### DETAILED DESCRIPTION OF THE EMBODIMENTS

Hereinafter, specific embodiments of the present invention will be described in detail. It should be understood that the specific embodiments described herein are only used to illustrate and explain the present invention and are not used to limit the present invention.

It should be noted that the numerical representations of "first", "second", etc., in the present invention are merely used to distinguish different substances or modes of use rather than indicating an order.

A first aspect of the present invention provides a negative electrode plate, which comprises a negative electrode current collector, a first coating on the surface of one or both sides of the negative electrode current collector, and a second coating on the surface of the first coating, wherein the first coating comprises first silicon particles and a coating layer on the surface of the first silicon particles; the coating layer comprises a polymer material, carbon nanotubes, and a first conductive agent; and the ratio R of a centre-to-centre distance of the adjacent first silicon particles to a median particle size Dv50 of the first silicon particles is (0.01-100) : 1.

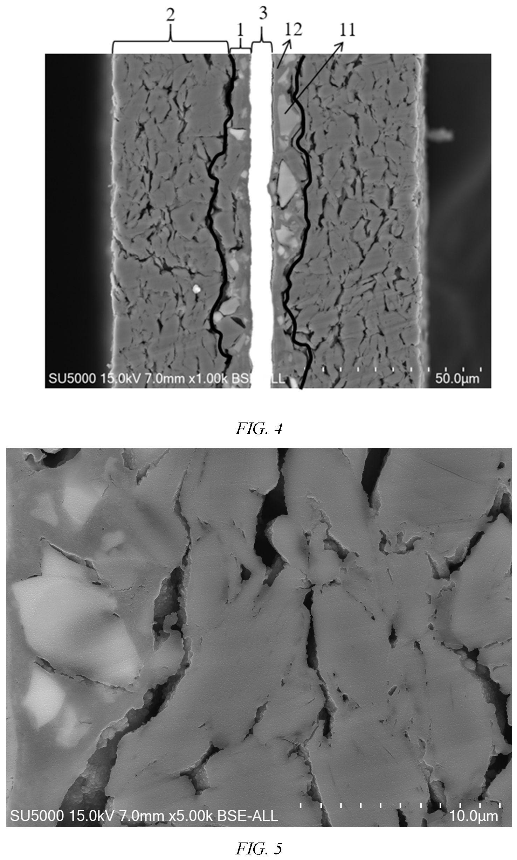

As shown in FIGs. 3 and 4, the negative electrode plate comprises a negative electrode current collector 3, a first coating 1 provided on the surface of one or both sides of the negative electrode current collector 3, and a second coating 2 on the surface of the first coating. The first coating 1 comprises first silicon particles 11, and a coating layer 12 on the surface of the first silicon particles 11, wherein the coating layer comprises a polymer material, carbon nanotubes, and a first conductive agent. By disposing the first silicon particles and the second active material (including one or both of graphite particles and hard carbon particles) respectively in two different coatings (with the first silicon particles being disposed in the first coating, and the second active material being disposed in the second coating), it is possible to reduce or even overcome the movement and rearrangement of the particles due to the significant difference in expansion coefficients of the first silicon particles and the second active material to cause an increase in the inter-particle voids, it can also reduce the stretching frequency of the binder per cycle and reduce the fatigue strength requirement for the binder, thereby improving the cycling stability of the battery. Additionally, the polymer material is an elastic material, which can effectively suppress the expansion of silicon, strengthen the adhesion of the negative electrode active layer, improve the stability of the adhesion network, and prevent delamination during charging and discharging. The stable presence of the adhesion network is conducive to the stability of the conductive network in the electrode plate, reduces the risk of failure of the conductive network, and improves the cycling capacity retention rate. In addition, the polymer material also functions as a binder to bond the second coating and the current collector, giving full play to the comprehensive performance of the silicon particles and graphite.

The coating layer may comprise a polymer material, carbon nanotubes, and a first conductive agent. The polymer material in the coating layer can provide a buffer space for the volume changes of silicon particles, and the first conductive agent in the coating layer is conductive and provides electron channels for the coating layer. Therefore, the coating layer can not only provide a buffer space for the volume changes of silicon particles, but also has an electrical conductivity property, improving the electrical conductivity of the first coating. Moreover, due to the presence of the coating layer, the thermal failure of silicon particles caused by short circuits and elevated temperatures can be mitigated, thereby enabling the negative electrode plate to have high safety performance.

The ratio R of the centre-to-centre distance of the adjacent first silicon particles to the median particle size Dv50 of the first silicon particles is (0.01-100) : 1 (e.g., 0.01 : 1, 0.05 : 1, 0.1 : 1, 0.5 : 1, 1 : 1, 5 : 1, 10 : 1, 50 : 1, 60 : 1, 70 : 1, 80 : 1, 90 : 1, and 100 : 1). When R is less than 0.01, the buffer space provided by the coating layer for the volume change of the silicon particles is inadequate, such that the expansion rate of the negative electrode plate remains high; and when R is greater than 100, although the coating layer provides sufficient buffer space for the volume change of the silicon particles, thereby reducing the expansion rate of the negative electrode plate, it tends to increase the internal resistance of the battery. Controlling the ratio R of the thickness of the coating layer to the median particle size Dv50 of the first silicon particles in the ranges above enables the partial or complete coating of the first silicon particles by the coating layer and ensures that the coating layer surrounds all the first silicon particles. As a result, the coating layer provides a larger buffer space for the volume change of the silicon particles while ensuring low internal resistance of the batter, thereby enabling the battery to have better overall performance.

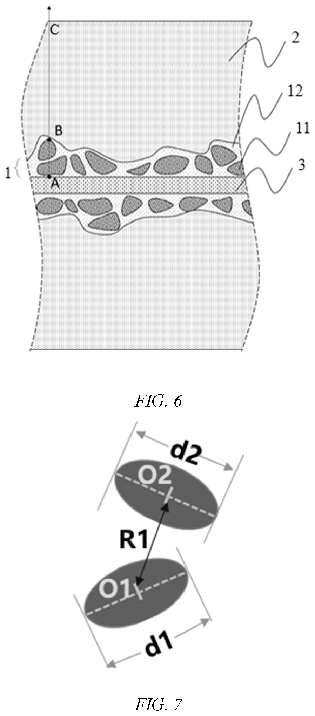

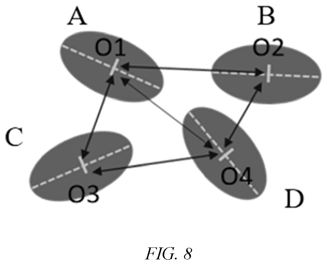

As shown in FIGs. 7 and 8, in a cross-sectional view of an arbitrary position of the negative electrode plate, the distance between the two points furthest apart in the cross-section of each first silicon particle is denoted as d, and the midpoint of d is denoted as O. Taking the two first silicon particles in FIG. 7 as an example, the distance between the two points furthest apart in the cross-section of the lower first silicon particle is d1, and the midpoint of d1 is O1; and the distance between the two points furthest apart in the cross-section of the upper first silicon particle is d2, and the midpoint of d2 is O2. The centre-to-centre distance of the adjacent first silicon particles is defined as the maximum distance between the central points O of any two adjacent first silicon particles, and two adjacent first silicon particles refer to two first silicon particles that are directly adjacent to each other, with no other silicon particles interposed therebetween. As shown in FIG. 8, the first silicon particle A and the first silicon particle B, and the first silicon particle A and the first silicon particle C both belong to adjacent first silicon particles, whereas the first silicon particle B and the first silicon particle C are not adjacent first silicon particles, since the first silicon particle A and the first silicon particle D exist between the first silicon particle B and the first silicon particle C. In a cross-sectional view of the negative electrode plate, there may be a plurality of adjacent first silicon particles. In this case, for example, as shown in FIG. 8, the centre-to-centre distance of the adjacent first silicon particles is the maximum distance between the central points O of any two adjacent first silicon particles, namely, the greatest value among O1O2, O1O3, O1O4, O3O4 and O2O4 is the centre-to-centre distance of the adjacent first silicon particles. Ten first silicon particles in the cross-sectional view are selected to calculate the average value of their centre-to-centre distances of the adjacent first silicon particles as the centre-to-centre distance of the adjacent first silicon particles.

In the present invention, by designing the negative electrode plate to have the aforementioned specific structure, the negative electrode plate is enabled to achieve a lower expansion rate and higher safety performance than those in the prior art. To further improve the effect, one or more technical features may be further optimized.

The first silicon particles are dispersed in the coating layer, and the coating layer adheres to the surface of the negative electrode current collector, so that the thickness of the coating layer is the thickness of the first coating. The surface of the first silicon particles may either be completely coated by the coating layer, or may be partially coated by the coating layer (for example, the first silicon particles are in contact with the negative electrode current collector, or the first silicon particles are partially exposed at the surface of the first coating, such that the first silicon particles are partially coated by the coating layer).

As can be seen from FIG. 5, the surface of the first silicon particles (light grey) is entirely coated by the coating layer (dark), and the second coating is provided on the surface of the coating layer (first coating). This ensures that during cycling, the coating layer on the surface of the first silicon particles can form an adhesion network that is not easily destroyed, thereby further reducing the expansion rate of the negative electrode plate and improving the safety performance of the negative electrode plate, while enhancing the adhesion between the coating layer and the second coating.

In an embodiment, the ratio R of the centre-to-centre distance of the adjacent particles to the median particle size Dv50 of the first silicon particles is (0.1-10) : 1.

According to a specific embodiment, the centre-to-centre distance of the adjacent first silicon particles is 0.05 µm - 2000 µm (e.g., 0.05 µm, 0.1 µm, 1 µm, 10 µm, 20 µm, 50 µm, 100 µm, 200 µm, 300 µm, 400 µm, 500 µm, 600 µm, 700 µm, 800 µm, 900 µm, 1000 µm, 1300 µm, 1500 µm, 1700 µm, and 2000 µm).

In an embodiment, the centre-to-centre distance of the adjacent first silicon particles is 0.1 µm - 500 µm.

In an embodiment, the carbon nanotubes have a tube diameter of 0.5 nm - 40 nm (e.g., 0.5 nm, 1 nm, 5 nm, 10 nm, 15 nm, 20 nm, 25 nm, 30 nm, 35 nm, and 40 nm), and/or the carbon nanotubes may have a length of 1 µm - 40 µm (e.g., 1 µm, 5 µm, 10 µm, 15 µm, 20 µm, 25 µm, 30 µm, 35 µm, and 40 µm), and/or the carbon nanotubes may have a length-to-diameter ratio of 25-80000 (e.g., 25, 100, 250, 300, 400, 500, 600, 700, 800, 900, 1000, 3000, 10000, 50000, and 80000). The carbon nanotubes in the coating layer have the following functions: 1) carbon nanotubes are capable of reducing the internal resistance of lithium batteries, which is the most important function thereof as a conductive agent. 2) Carbon nanotubes are capable of increasing the adhesion strength of the electrode plate in the lithium battery and reducing the amount of the binder used. Unlike zero-dimensional conductive carbon black, which exhibits a relatively low connection strength with binders, carbon nanotubes are a kind of materials with a high length-to-diameter ratio, which not only have the function of conducting electricity, but also have the function of enhancing the bonding strength with the binder to some extent. 3) Carbon nanotubes are capable of extending the cycle life of the battery. As a conductive additive with a high length-to-diameter ratio, carbon nanotubes can build a large-scale conductive network inside the battery, thereby mitigating issues such as cracking caused by the expansion or shrinkage of electrodes and other materials. By defining the above-mentioned specific characteristics of carbon nanotubes, the conductivity of carbon nanotubes can be further improved, and the strength of the conductive network formed by the carbon nanotubes can be increased, thus improving the cycling capacity retention rate of the battery.

In an embodiment, the carbon nanotubes have a tube diameter of 1.2 nm - 10 nm, and/or the carbon nanotubes have a length of 2 µm - 30 µm, and/or the carbon nanotubes have a length-to-diameter ratio of 1000-25000.

According to a specific embodiment, the first silicon particles have a median particle size Dv50 of 5 µm - 20 µm (e.g., 5 µm, 8 µm, 10 µm, 13 µm, 15 µm, 18 µm, and 20 µm). In the present invention, the median particle size Dv50 can be measured using a laser particle size analyser.

In an embodiment, the median particle size Dv50 of the first silicon particles is 6 µm - 15 µm.

In an embodiment, the first silicon particles comprise one or more of silicon-carbon particles, silicon-oxygen particles, and nanosilicon particles.

In an embodiment, the silicon-carbon particles include particles formed by mixing silicon or partially oxidized silicon with amorphous or crystalline carbon.

In an embodiment, the silicon-carbon particles include particles formed by filling (including partially filling or completely filling) the pores of porous amorphous carbon or porous crystalline carbon with silicon or partially oxidized silicon. The above-mentioned porous amorphous carbon or porous crystalline carbon is mainly used as a structural support and may also possess a certain reversible lithium storage capacity per gram. Silicon or partially oxidized silicon has a high reversible lithium storage capacity per gram, and filling silicon or partially oxidized silicon in pores of porous amorphous carbon or porous crystalline carbon can prevent the agglomeration and cracking of silicon or partially oxidized silicon, thereby improving the structural stability of silicon-based particles.

In an embodiment, the silicon-oxygen particles include a mixture of amorphous silicon and oxygen. Due to the presence of oxygen element, the silicon-oxygen particles form inert or low-activity components, such as silicates, upon the first lithium intercalation. These components serve as a buffer matrix for silicon expansion, and thus can enhance the structural stability of the silicon-based particles.

In an embodiment, the silicon-oxygen particles include a substance having a chemical formula of MₐSi_{b}Oₓ, where 0 ≤ a < 5, 0 ≤ b < 3, and 0 ≤ x ≤ 2, and
M includes one or both of Li and Mg. The M element, including specific elements, can combine with the O element and Si element to form inert or low-activity silicates, thereby reducing the side reactions of the silicon-based particles during the first lithium intercalation process and increasing the initial Coulombic efficiency of the silicon-based particles.

In an embodiment, the silicon-oxygen particles include one or more of the following substances: a mixture of amorphous silicon and oxygen, Si, SiO₂, Li₂SiO₃, Li₂Si₂O₅, Li₄SiO₄, MgSiO₃, Mg₂SiO₄, and Li₂O.

In an embodiment, the silicon-oxygen particles include one or more of a mixture of amorphous silicon and oxygen, Li₂SiO₃(crystalline), and Li₂Si₂O₅ (crystalline). Li₂SiO₃ and Li₂Si₂O₅ are the crystalline phases formed upon the incorporation of the Li element into the silicon-oxygen particles, and the formation of Li₂SiO₃ (crystalline) and Li₂Si₂O₅ (crystalline) can improve the initial Coulombic efficiency of the silicon-based particles.

In an embodiment, the silicon-oxygen particles contain an amorphous carbon coating layer on the surface thereof. The amorphous carbon coating layer can serve to isolate the electrolyte, thereby inhibiting the side reactions on the surface of the silicon-oxygen particles and improving the structural stability of the silicon-oxygen particles.

In an embodiment, the polymer material is an elastic material. The polymer material is elastic, which, on the one hand, enables the coating layer to provide a buffer space for the volume change of silicon particles, and on the other hand, can accommodate the volume change of silicon particles, ensuring that the adhesion performance thereof does not fail during cycling.

In an embodiment, the polymer material includes one or more of a butadiene-styrene polymer, a polystyrene-acrylate polymer, an acrylate polymer, a polydimethylsiloxane, a polyurethane, and a polyacrylic acid-acrylonitrile copolymer (a PAA-PAN copolymer).

In an embodiment, the first conductive agent has a porous structure. When the first conductive agent has a porous structure, the polymer material may occupy the space of the porous structures in the first conductive agent, thereby providing more buffer space for the volume change of silicon particles. For example, upon the volumetric expansion of silicon particles, the polymer material under compression is partially compressed into and occupies the pores of the first conductive agent, thereby providing more buffer space for the silicon particles. Additionally, porous carbon is conducive to electrolyte infiltration, improving the conductivity of lithium ions, thereby improving the overall electrochemical performance of the negative electrode.

According to a specific embodiment, the first conductive agent has a specific surface area of 1 m²/g - 5000 m²/g (e.g., 1 m²/g, 5 m²/g, 10 m²/g, 50 m²/g, 100 m²/g, 500 m²/g, 1000 m²/g, 2000 m²/g, 3000 m²/g, 4000 m²/g, and 5000 m²/g). When the specific surface area of the first conductive agent is controlled within the range above, sufficient space can be provided for the polymer material entering into the pores of the first conductive agent.

In an embodiment, the first conductive agent has a specific surface area of 5 m²/g - 1000 m²/g.

In an embodiment, the first conductive agent includes one or more of conductive carbon black, conductive graphite, carbon fibres, and graphene.

In an embodiment, the first conductive agent includes one or more of conductive carbon black, conductive graphite, and carbon fibres. The use of the first conductive agent described above can provide more space for the polymer material under compression.

In an embodiment, the coating layer further comprises a first dispersant.

In an embodiment, the first dispersant includes one or more of sodium carboxymethylcellulose, sodium polyacrylate, sodium alginate, lithium carboxymethylcellulose, polyacrylic acid, polyacrylamide, polyvinyl alcohol, a polyacrylic acid-acrylamide copolymer, a polyvinyl alcohol-acrylic acid copolymer, a polyacrylic acid-acrylonitrile copolymer, and a polyacrylic acid-acrylonitrile-acrylamide copolymer.

According to a specific embodiment, based on the total weight of the first coating, the content by weight of the first silicon particles is 10 wt% - 90 wt% (e.g., 10 wt%, 15 wt%, 20 wt%, 25 wt%, 30 wt%, 35 wt%, 40 wt%, 45 wt%, 50 wt%, 55 wt%, 60 wt%, 65 wt%, 70 wt%, 75 wt%, 80 wt%, 85 wt%, and 90 wt%), the content by weight of the polymer material is 2 wt% - 60 wt% (e.g., 2 wt%, 5 wt%, 10 wt%, 15 wt%, 20 wt%, 25 wt%, 30 wt%, 35 wt%, 40 wt%, 45 wt%, 50 wt%, 55 wt%, and 60 wt%), the content by weight of the carbon nanotubes is 0.05 wt% - 20 wt% (e.g., 0.1 wt%, 0.2 wt%, 0.5 wt%, 0.8 wt%, 1 wt%, 5 wt%, and 10 wt%), the content by weight of the first conductive agent is 0.5 wt% - 50 wt% (e.g., 0.5 wt%, 1 wt%, 5 wt%, 10 wt%, 15 wt%, 20 wt%, 25 wt%, 30 wt%, 35 wt%, 40 wt%, 45 wt%, and 50 wt%), and the content by weight of the first dispersant is 0.5 wt% - 45 wt% (e.g., 0.5 wt%, 1 wt%, 5 wt%, 10 wt%, 15 wt%, 20 wt%, 25 wt%, 30 wt%, 35 wt%, 40 wt%, and 45 wt%).

In an embodiment, based on the total weight of the first coating, the content by weight of the first silicon particles is 30 wt% - 80 wt%, the content by weight of the polymer material is 4 wt% - 50 wt%, the content by weight of the carbon nanotubes is 0.1 wt% - 10 wt%, the content by weight of the first conductive agent is 4 wt% - 40 wt%, and the content by weight of the dispersant is 2 wt% - 20 wt%.

In an embodiment, the second coating comprises a second active material, and optionally ("optionally" means that the substance may or may not be present) second silicon particles, and the second active material includes one or both of graphite particles and hard carbon particles.

In an embodiment, the second coating comprises a second active material.

In an embodiment, the graphite particles include natural graphite and/or artificial graphite.

In an embodiment, the second coating further comprises a second conductive agent, a binder, and a second dispersant.

According to a specific embodiment, the second active material has a median particle size Dv50 of 1 µm - 30 µm (e.g., 5 µm, 10 µm, 15 µm, 20 µm, 25 µm, and 30 µm). In this range, the second active material possesses a moderate particle size, leading to less surface side reactions, better lithium intercalation kinetics, and high cycling stability.

In an embodiment, the second active material has a median particle size Dv50 of 4 µm - 25 µm.

In an embodiment, the second silicon particles have a median particle size Dv50 of 5 µm - 20 µm (e.g., 5 µm, 8 µm, 10 µm, 12 µm, 15 µm, 18 µm, and 20 µm).

In an embodiment, the second silicon particles include one or more of silicon-carbon particles, silicon-oxygen particles, and nanosilicon particles.

In an embodiment, the silicon-carbon particles include particles formed by mixing silicon or partially oxidized silicon with amorphous or crystalline carbon.

In an embodiment, the silicon-carbon particles include particles formed by filling (including partially filling or completely filling) the pores of porous amorphous carbon or porous crystalline carbon with silicon or partially oxidized silicon.

In an embodiment, the silicon-oxygen particles include a mixture of amorphous silicon and oxygen.

In an embodiment, the silicon-oxygen particles include a substance having a chemical formula of MₐSi_{b}Oₓ, where 0 ≤ a < 5, 0 ≤ b < 3, and 0 ≤ x ≤ 2, and
M includes one or both of Li and Mg.

In an embodiment, the silicon-oxygen particles include one or more of the following substances: a mixture of amorphous silicon and oxygen, Si, SiO, SiO₂, Li₂SiO₃, Li₂Si₂O₅, Li₄SiO₄, MgSiO₃, Mg₂SiO₄, and Li₂O.

In an embodiment, the silicon-oxygen particles include one or more of a mixture of amorphous silicon and oxygen, Li₂SiO₃(crystalline), and Li₂Si₂O₅ (crystalline).

In an embodiment, the silicon-oxygen particles contain an amorphous carbon coating layer on the surface thereof.

In an embodiment, the second conductive agent includes one or more of conductive carbon black, conductive graphite, carbon fibres, carbon nanotubes, and graphene.

In an embodiment, the binder includes one or more of a butadiene-styrene polymer, a polystyrene-acrylate polymer, an acrylate polymer, a polydimethylsiloxane, and a polyurethane material.

In an embodiment, the second dispersant includes one or more of sodium carboxymethylcellulose, sodium polyacrylate, sodium alginate, lithium carboxymethylcellulose, polyacrylic acid, polyacrylamide, polyvinyl alcohol, a polyacrylic acid-acrylamide copolymer, a polyvinyl alcohol-acrylic acid copolymer, a polyacrylic acid-acrylonitrile copolymer, and a polyacrylic acid-acrylonitrile-acrylamide copolymer.

According to a specific embodiment, based on the total weight of the second coating, the content by weight of the second active material is 70 wt% - 99 wt% (e.g., 70 wt%, 75 wt%, 80 wt%, 85 wt%, 90 wt%, 95 wt%, and 98 wt%), the content by weight of the second silicon particles is 0 wt% - 5 wt% (e.g., 0 wt%, 0.1 wt%, 0.5 wt%, 1 wt%, 2 wt%, 3 wt%, 4 wt%, and 5 wt%), the content by weight of the second conductive agent is 0 wt% - 20 wt% (e.g., 0 wt%, 0.1 wt%, 0.5 wt%, 1 wt%, 5 wt%, 10 wt%, 15 wt%, and 20 wt%), the content by weight of the binder is 0.5 wt% - 20 wt% (e.g., 0.5 wt %, 1 wt%, 3 wt%, 5 wt%, 8 wt%, 10 wt%, 12 wt%, 15 wt%, 18 wt%, and 20 wt%), and the content by weight of the second dispersant is 0.2 wt% - 20 wt% (e.g., 0.2 wt %, 0.3 wt %, 0.6 wt %, 1 wt%, 3 wt%, 5 wt%, 8 wt%, 10 wt%, 12 wt%, 15 wt%, 18 wt%, and 20 wt%).

When the content by weight of the second silicon particles is 0 wt%, it means that no second silicon particles are present in the second coating, and in this case, the expansion rate of the negative electrode plate can be further reduced.

When the content by weight of the second conductive agent is 0 wt%, it means that no second conductive agent is present in the second coating.

In an embodiment, based on the total weight of the second coating, the content by weight of the second active material is 80 wt% - 98.2 wt%, the content by weight of the second silicon particles is 0 wt% - 3 wt%, the content by weight of the second conductive agent is 0 wt% - 5 wt%, the content by weight of the binder is 0.5 wt% - 10 wt%, and the content by weight of the second dispersant is 0.5 wt% - 10 wt%.

In an embodiment, the surface of the first coating facing away from the negative electrode current collector has protrusions (as shown in FIG. 6). The first coating forms protrusions on the surface adjacent to the second coating based on the shape and packing arrangement of the first silicon particles; that is, the contact surface between the first coating and the second coating is uneven. Such an uneven surface can increase the contact area between the first silicon particles and the second coating, thereby improving the uniformity of lithium-ion intercalation into the silicon-based particles, effectively inhibiting the excessive expansion caused by excessive localized lithium intercalation of the first silicon particles, and improving the structural stability of the negative electrode plate during cycling.

In an embodiment, the first coating has a flatness β of 4 µm - 30 µm (e.g., 4 µm, 5 µm, 10 µm, 15 µm, 20 µm, 25 µm, and 30 µm). When β is less than 4 µm, the surface of the first coating facing away from the current collector is relatively smooth, and the contact surface between the first silicon particles and the second coating is smaller, leading to poor uniformity of the lithium intercalation of the silicon-based particles; and when β is greater than 30 µm, the first coating exhibits significant non-uniformity in the distribution of the first silicon particles, resulting in excessive localized expansion, which affects the cycling performance of the battery.

In an embodiment, the first coating has a flatness β of 8 µm - 20 µm.

In the present invention, the flatness can be obtained by a method as follows: The negative electrode plate is cut in the direction perpendicular to the surface thereof to obtain a cross-section of the negative electrode plate, and any area of the negative electrode plate with a length of not less than 80 µm is observed using SEM. As shown in FIG. 6, along the direction perpendicular to the surface of the negative electrode plate, at any point A on the surface of the negative electrode current collector, a straight line towards the coatings of the negative electrode is drawn, which line passes through the first coating and the second coating in sequence. If the line intersects the boundary of the cross-section of the first silicon particles in the first coating at one or more points, the intersection point furthest from point A is designated as point B. The length of the line segment AB is defined as the distribution width f of the first silicon particles at the position of point A. If the line has no intersection point with the boundary of the cross-section of any first silicon particle, the distribution width of the silicon-based particles at the position of point A is defined as 0. Taking the maximum value of f in the observation area as fₘₐₓ and the minimum value as fₘᵢₙ, the flatness of the first coating is calculated as β = fₘₐₓ - fₘᵢₙ.

Methods for controlling the flatness may include selecting first silicon particles with a moderate particle size, controlling the content of the first silicon particles, and applying a second coating without rolling the first coating.

According to a specific embodiment, the first coating has a thickness d1 of 0.1 µm - 50 µm (e.g., 0.1 µm, 0.5 µm, 1 µm, 5 µm, 10 µm, 20 µm, 30 µm, 40 µm, and 50 µm). Within this range, coating/scraping issues caused by an excessively thin first coating can be avoided, and the issue of overly broad distribution of silicon-based particles in the thickness direction due to an excessive thickness of the first coating can also be avoided, thereby improving the uniformity of the lithium intercalation of the silicon-based particles.

In the present invention, the thickness of the coating is the thickness of the coating on one side. For example, the thickness of the first coating is defined as follows: when the first coating is provided on one side of the negative electrode current collector, the thickness of the first coating refers to the thickness of the first coating on that side (the first coating on one side of the negative electrode current collector); and when the first coating is provided on both sides of the negative electrode current collector, the thicknesses of the first coatings on both sides of the negative electrode current collector are identical, and the thickness of the first coating refers to the thickness of the first coating on either individual side of the negative electrode current collector. The thickness of the second coating likewise refers to the thickness of the coating on a single side.

In an embodiment, the thickness d1 of the first coating is 1 µm - 40 µm.

According to a specific embodiment, the second coating has a thickness d2 of 5 µm - 100 µm (e.g., 5 µm, 10 µm, 20 µm, 30 µm, 40 µm, 50 µm, 60 µm, 70 µm, 80 µm, 90 µm, and 100 µm). Within this range, coating/scraping issues caused by an excessively thin second coating can be avoided, and excessive lithiation polarization and non-uniform lithium intercalation within the coating, caused by an overly thick second coating, can also be prevented.

In an embodiment, the thickness d2 of the second coating is 10 µm - 80 µm.

In an embodiment, the thickness d2 of the second coating is greater than the thickness d1 of the first coating. When the thickness d2 of the second coating is greater than the thickness d1 of the first coating, the second coating is relatively thick, and the electrode plate exhibits low expansion during cycling, which is beneficial to reducing the overall expansion rate of the electrode plate.

As shown in FIG. 6, the thickness of the first coating and the second coating can be obtained by a method as follows: the negative electrode plate is cut in the direction perpendicular to the surface thereof to obtain a cross-section of the negative electrode plate, and any area of the negative electrode plate with a length of not less than 80 µm is observed using SEM. Along the direction perpendicular to the surface of the negative electrode plate, at any point A on the surface of the negative electrode current collector, a straight line towards the coatings of the negative electrode is drawn, which line passes through the first coating and the second coating in sequence. The line intersects the boundary of the cross-section of the first silicon particles in the first coating at one or more points, the intersection point furthest from point A is designated as point B, and the intersection point between the line and the surface of the second coating facing away from the negative electrode current collector is designated as point C. Within the observation area, the maximum length of line segment AB is designated as the thickness a of the first coating, and the length of line segment BC is designated as the thickness b of the second coating.

In an embodiment, the negative electrode current collector includes one or more of copper foil, composite copper foil, and porous copper foil.

According to a specific embodiment, the negative electrode plate has an areal density of 1 mg/cm² - 15 mg/cm² (e.g., 1 mg/cm², 2 mg/cm², 3 mg/cm², 4 mg/cm², 5 mg/cm², 6 mg/cm², 7 mg/cm², 8 mg/cm², 9 mg/cm², 10 mg/cm², and 15 mg/cm²). When the areal density of the negative electrode plate is controlled in the range above, strong adhesion can be ensured, powder shedding from the negative electrode plate is prevented, and the internal resistance is low, thereby meeting the kinetic needs of a battery.

The areal density of the negative electrode is the sum of the areal density of the first coating and the areal density of the second coating. In the present invention, areal density denotes single-sided areal density. Taking the areal density of the first coating as an example: when the first coating is provided on one side of the negative electrode current collector, the areal density of the first coating is that of said side (i.e., the side with the first coating); and when the first coating is provided on both sides of the negative electrode current collector, the areal densities of the first coatings on both sides are identical, and the areal density of the first coating refers to the areal density on either individual side.

In an embodiment, the negative electrode plate has an areal density of 4 mg/cm² - 11 mg/cm².

According to a specific embodiment, the negative electrode plate has a compacted density of 1 g/cm³ - 2 g/cm³ (e.g., 1 g/cm³, 1.3 g/cm³, 1.5 g/cm³, 1.55 g/cm³, 1.6 g/cm³, 1.65 g/cm³, 1.7 g/cm³, 1.75 g/cm³, 1.8 g/cm³, 1.85 g/cm³, 1.9 g/cm³, and 2 g/cm³). When the compacted density of the negative electrode plate is controlled in the above range, it ensures that the negative electrode plate is not overly rolled, maintaining optimal porosity which is conducive to electrolyte infiltration.

In an embodiment, the negative electrode plate has a compacted density of 1.6 g/cm³ - 1.8 g/cm³.

A second aspect of the present invention provides a battery comprising the negative electrode plate of the first aspect of the present invention.

The materials of the battery other than the negative electrode plate may be those conventional in the art, and in all such cases, the battery can achieve low expansion rates, high cycling stability, and high safety performance.

The battery may be a lithium-ion battery.

Since the battery of the present invention comprises the negative electrode plate of the present invention, the battery exhibits low expansion rates, high cycling stability, and improved safety performance.

The present invention will be described in detail below by means of examples. The examples described in the present invention are only some, rather than all, of the examples of the present invention. Based on the examples of the present invention, all other examples obtained by those of ordinary skill in the art without creative efforts fall within the scope of protection of the present invention.

The following examples are intended to illustrate the negative electrode plate of the present invention.

### Example 1

### (1) Preparation of ingredients

Negative electrode current collector: copper foil;
first coating: 50 parts by weight of first silicon particles (silicon-carbon particles (the silicon-carbon particles were particles in which silicon was deposited in pores of porous amorphous carbon), with a median particle size Dv50 of 9.01 µm), and a coating layer (10 parts by weight of a first conductive agent (conductive carbon black) and 1.6 parts by weight of a carbon nanotube conductive agent, 20 parts by weight of a polymer material (styrene-butadiene rubber (SBR)), and 18.4 by weight of a first dispersant (sodium carboxymethylcellulose (CMC-Na)));
second coating: 97.7 parts by weight of a second active material (artificial graphite), 0.5 parts by weight of a second conductive agent (conductive carbon black), 1.2 parts by weight of a binder (styrene-butadiene rubber), and 0.6 parts by weight of a second dispersant (lithium carboxymethylcellulose).

### (2) Preparation of negative electrode plate

The first silicon particles, the first conductive agent (with a specific surface area of 800 m²/g), a polymer material and a first dispersant were dispersed in deionized water and then stirred to obtain a uniformly dispersed first slurry, which had a solid content of 16%, and a viscosity of 3500 mPa·s - 6500 mPa·s. The first slurry was sieved through a 150-mesh screen and then uniformly coated on the surface on both sides of the negative electrode current collector to form first coatings, where the first coatings had an uneven surface formed based on the surface of the first silicon particles, and were coated with an areal density of 0.75 mg/cm². The first coatings were dried at 80°C for 10 h, and then rolled until the first coatings had a compacted density of 0.8 g/cm³, so as to obtain a negative electrode plate comprising the first coatings.

The second active material, the conductive agent, the binder, and the second dispersant were dispersed in deionized water and then stirred to obtain a uniformly dispersed second slurry, which had a solid content of 48%, and a viscosity of 3500 mPa·s - 6500 mPa·s. The second slurry was sieved through a 150-mesh screen and then uniformly coated onto the surfaces of the first coatings to form second coatings, which had an areal density of 5.18 mg/cm². The second coatings were dried at 80°C for 10 h to obtain a negative electrode plate, which had an areal density of 5.80 mg/cm², and a compacted density of 1.72 g/cm³.

### Example 2 group

This example group was carried out with reference to Example 1, except that by changing the median particle size Dv50 of the first silicon particles and/or the centre-to-centre distance of the adjacent first silicon particles, the ratio R of the centre-to-centre distance of the adjacent first silicon particles to the median particle size Dv50 of the first silicon particles was adjusted. See Tables 1-1 and 1-2 for details.

### Example 3 group

This example group was carried out with reference to Example 1, except that the specific surface area of the first conductive agent was adjusted by selecting different specific types of the first conductive agent. See Tables 1-1 and 1-2 for details. The centre-to-centre distance of the adjacent first silicon particles was inevitably changed.

### Example 4 group

This example group was carried out with reference to Example 1, except that the content by weight of the first silicon particles in the first coating was changed. See Tables 1-1 and 1-2 for details.

### Example 5 group

This example group was carried out with reference to Example 1, except that the content by weight of the first conductive agent in the first coating was changed. See Tables 1-1 and 1-2 for details. The centre-to-centre distance of the adjacent first silicon particles was inevitably changed.

### Example 6 group

This example group was carried out with reference to Example 1, except that the specific selection of the polymer material was changed. See Tables 1-1 and 1-2 for details.

### Example 7 group

This example group was carried out with reference to Example 1, except that the specific selection of the first silicon particles was changed. See Tables 1-1 and 1-2 for details.

### Example 8 group

This example group was carried out with reference to Example 1, except that second silicon particles were added in the second coating. Example 8a: in the second coating: 97.7 parts by weight of (95% graphite particles + 5% second silicon particles), 0.5 parts by weight of a second conductive agent (conductive carbon black), 1.2 parts by weight of a binder (styrene-butadiene rubber), and 0.6 parts by weight of a second dispersant (lithium carboxymethylcellulose); Example 8b: in the second coating: 97.7 parts by weight of (95% graphite particles + 2.5% second silicon particles), 0.5 parts by weight of a second conductive agent (conductive carbon black), 1.2 parts by weight of a binder (styrene-butadiene rubber), and 0.6 parts by weight of a second dispersant (lithium carboxymethylcellulose).

### Example 9 group

This example group was carried out with reference to Example 1, except that one or more of the tube diameter, length, and length-to-diameter ratio of the carbon nanotubes were changed. See Tables 1-1 and 1-2 for details.

### Example 10 group

This example group was carried out with reference to Example 1, except that the content of the carbon nanotubes in the first coating was changed. See Tables 1-1 and 1-2 for details.

### Example 11

This example was carried out with reference to Example 1, except that the composition of the first coating was changed. See Tables 1-1 and 1-2 for details.

### Example 12

This example was carried out with reference to Example 1, except that the composition of the first coating was changed. See Tables 1-1 and 1-2 for details.

### Example 13

This example was carried out with reference to Example 1, except that the composition of the first coating was changed. See Tables 1-1 and 1-2 for details.

### Example 14 group

This example group was carried out with reference to Example 1, except that the flatness of the first coating was changed through the rolling operation. In Example 14a, prior to coating the second coating, the negative electrode plate comprising the first coating was rolled, enabling the first coating to have a compacted density of 1.0 g/cm³. In Example 14b, the negative electrode plate comprising the first coating was rolled, enabling the first coating to have a compacted density of 0.61 g/cm³. In Example 14c, the negative electrode plate comprising the first coating was rolled, enabling the first coating to have a compacted density of 0.48 g/cm³. See Tables 1-1 and 1-2 for details.

**Table 1-1**

| | First coating | | | | | | | | | | | | |
|---|---|---|---|---|---|---|---|---|---|---|---|---|---|
| | First silicon particles | Dv50 of first silicon particles /µm | Centre-to-centre distance of adjacent first silicon particles | Content b y weight of first silicon particles in first coating/ % | Content by weight of first conduct ive agent in first coating/ % | First conductive agent | Specific surface area of first conduct ive agent/( m²/g) | Content by weight of carbon nanotub es in first coating/ % | Tube diamete r of carbon nanotub es/nm | Length of carbon nanotub es/µm | Length-to-diamete r ratio of carbon nanotub es | Content by weight of polymer material in first coating/ % | Poly mer mater ial |
| Example 1 | Silicon-carbon particles | 9.01 | 10.7 | 50 | 10 | Conductive carbon black | 805.2 | 1.6 | 1.6 | 4.8 | 3000 | 20 | SBR |
| Example 2a | * | 17.04 | 42.11 | * | * | * | * | * | * | * | * | * | * |
| Example 2b | * | 4.02 | 2.2 | * | * | * | * | * | * | * | * | * | * |
| Example 2c | * | * | 861 | * | * | * | * | * | * | * | * | * | * |
| Example 2d | * | * | 0.12 | * | * | * | * | * | * | * | * | * | * |
| Example 2e | * | 42.6 | 2186 | * | * | * | * | * | * | * | * | * | * |
| Example 3a | * | * | 10.89 | * | * | Graphene | 624.3 | * | * | * | * | * | * |
| Example 3b | * | * | 10.54 | * | * | Conductive graphite | 2.2 | * | * | * | * | * | * |
| Example 3c | * | * | 10.08 | * | * | Carbon fibre | 50.8 | * | * | * | * | * | * |
| Example 3d | * | * | 11.25 | * | * | Porous graphene | 4265.4 | * | * | * | * | * | * |
| Example 4a | * | * | 86.5 | 26 | * | * | * | * | * | * | * | * | * |
| Example 4b | * | * | 6.85 | 63 | * | * | * | * | * | * | * | * | * |
| Example 5a | * | * | 10.63 | * | 1.5 | * | * | * | * | * | * | * | * |
| Example 5b | * | * | 11.17 | * | 27 | * | * | * | * | * | * | * | * |
| Example 6a | * | * | * | * | * | * | * | * | * | * | * | * | Polystyrene -acrylate polymer |
| Example 6b | * | * | * | * | * | * | * | * | * | * | * | * | Polyacrylic acid-acrylonitrile copolymer |
| Example 6c | * | * | * | * | * | * | * | * | * | * | * | * | Polyacrylic acid |
| Example 7a | Silicon-oxygen particles | * | * | * | * | * | * | * | * | * | * | * | * |
| Example 7b | Nanosili con particles | 0.1 | 0.005 | * | * | * | * | * | * | * | * | * | * |
| Example 8a | * | * | * | * | * | * | * | * | * | * | * | * | * |
| Example 8b | * | * | * | * | * | * | * | * | * | * | * | * | * |
| Example 9a | * | * | * | * | * | * | * | * | 20 | * | 240 | * | * |
| Example 9b | * | * | * | * | * | * | * | * | * | 36 | 2250 | * | * |
| Example 9c | * | * | * | * | * | * | * | * | 8 | * | 600 | * | * |
| Example 9d | * | * | * | * | * | * | * | * | 60 | * | 80 | * | * |
| Example 9e | * | * | * | * | * | * | * | * | * | 0.1 | 1000 | * | * |
| Example 9f | * | * | * | * | * | * | * | * | 60 | 0.1 | 1.7 | * | * |
| Example 10a | * | * | * | * | * | * | * | 0.08 | * | * | * | * | * |
| Example 10b | * | * | * | * | * | * | * | 8.6 | * | * | * | * | * |
| Example 11 | * | * | 127.04 | 16.2 | 44.5 | * | * | 16.4 | * | * | * | 5 | * |
| Example 12 | * | * | 7.3 | 82.6 | 0.7 | * | * | 0.1 | * | * | * | 12.3 | * |
| Example 13 | * | * | 13.88 | 42.7 | 3.2 | * | * | 1.6 | * | * | * | 45.6 | * |
| Example 14a | * | * | * | * | * | * | * | * | * | * | * | * | * |
| Example 14b | * | * | * | * | * | * | * | * | * | * | * | * | * |
| Example 14c | * | * | * | * | * | * | * | * | * | * | * | * | * |

| | | | | | | | | | | | | | |
|---|---|---|---|---|---|---|---|---|---|---|---|---|---|
| [0146] * indicates the same as in Example 1. | | | | | | | | | | | | | |

**Table 1-2**

| | First coating | | | Second coating | | | | | | Negative electrode plate | |
|---|---|---|---|---|---|---|---|---|---|---|---|
| | R | Flatness of first coating/ µm | Areal density of first coating/ (mg/cm²) | Content by weight of active material in second coating/% | Dv50 of active material in second coating/ µm | Second conductive agent | Second silicon particles | Content by weight of second silicon particles in second coating/ % | Graphite particles | Areal density/ (mg/cm²) | Compacted density of negative electrode plate/(g/cm³) |
| Example 1 | 1.19 | 16.8 | 0.75 | 98.2 | 13 | Conductive carbon black | - | 0 | Artificial graphite | 5.8 | 1.72 |
| Example 2a | 2.47 | * | * | * | * | * | - | * | * | * | * |
| Example 2b | 0.55 | * | * | * | * | * | - | * | * | * | * |
| Example 2c | 95.56 | * | * | * | * | * | - | * | * | * | * |
| Example 2d | 0.013 | * | * | * | * | * | - | * | * | * | * |
| Example 2e | 0.02 | * | * | * | * | * | - | * | * | * | * |
| Example 3a | 1.17 | * | * | * | * | * | - | * | * | * | * |
| Example 3b | 1.11 | * | * | * | * | * | - | * | * | * | * |
| Example 3c | 1.12 | * | * | * | * | * | - | * | * | * | * |
| Example 3d | 1.25 | * | * | * | * | * | - | * | * | * | * |
| Example 4a | 9.6 | * | 1.44 | * | * | * | - | * | * | 6.49 | * |
| Example 4b | 0.76 | * | 0.6 | * | * | * | - | * | * | 5.65 | * |
| Example 5a | 1.18 | * | * | * | * | * | - | * | * | * | * |
| Example 5b | 1.24 | * | * | * | * | * | - | * | * | * | * |
| Example 6a | * | * | * | * | * | * | - | * | * | * | * |
| Example 6b | * | * | * | * | * | * | - | * | * | * | * |
| Example 6c | * | * | * | * | * | * | * | * | * | * | * |
| Example 7a | * | * | * | * | * | * | - | * | * | * | * |
| Example 7b | 0.05 | * | * | * | * | * | - | * | * | * | * |
| Example 8a | * | * | * | * | * | * | Silicon-carbon | 5 | * | 5.07 | * |
| Example 8b | * | * | * | * | * | * | Silicon-carbon | 2.5 | * | 5.47 | * |
| Example 9a | * | * | * | * | * | * | - | * | * | * | * |
| Example 9b | * | * | * | * | * | * | - | * | * | * | * |
| Example 9c | * | * | * | * | * | * | - | * | * | * | * |
| Example 9d | * | * | * | * | * | * | - | * | * | * | * |
| Example 9e | * | * | * | * | * | * | - | * | * | * | * |
| Example 9f | * | * | * | * | * | * | - | * | * | * | * |
| Example 10a | * | * | * | * | * | * | - | * | * | * | * |
| Example 10b | * | * | * | * | * | * | - | * | * | * | * |
| Example 11 | 14.1 | * | * | * | * | * | - | * | * | * | * |
| Example 12 | 0.81 | * | * | * | * | * | - | * | * | * | * |
| Example 13 | 1.54 | * | * | * | * | * | - | * | * | * | * |
| Example 14a | * | 8.5 | * | * | * | * | - | * | * | * | * |
| Example 14b | * | 22.8 | * | * | * | * | - | * | * | * | * |
| Example 14c | * | 37.8 | * | * | * | * | - | * | * | * | * |

| | | | | | | | | | | | |
|---|---|---|---|---|---|---|---|---|---|---|---|
| * indicates the same as in Example 1; and - indicates the absence. | | | | | | | | | | | |

### Comparative example 1

### (1) Preparation of ingredients

Negative electrode current collector: copper foil;
96.6 wt% of a graphite/silicon composite negative electrode material (with a mass ratio of 93 : 7), 0.8 wt% of a conductive agent (conductive carbon black), 0.2 wt% of carbon nanotubes, 1.4 wt% of a binder (SBR), and 1 wt% of a dispersant (lithium carboxymethylcellulose).

### (2) Preparation of negative electrode plate

The graphite, silicon, conductive agent, and binder were dispersed in deionized water and then stirred to obtain a uniformly dispersed negative electrode slurry, which had a solid content of 48%, and a viscosity of 3500 mPa·s - 6500 mPa·s. The negative electrode slurry was sieved through a 150-mesh screen and then uniformly coated onto the surface on both sides of the negative electrode current collector with an areal density of 5.84 mg/cm², and then dried at 80°C for 10 h to obtain a negative electrode plate, which had a compacted density of 1.72 g/cm².

### Comparative example 2

This comparative example was carried out with reference to Example 1, except that the ratio R of the centre-to-centre distance of the adjacent first silicon particles to the median particle size Dv50 of the first silicon particles is 0.006.

### Comparative example 3

This comparative example was carried out with reference to Example 1, except that the ratio R of the centre-to-centre distance of the adjacent first silicon particles to the median particle size Dv50 of the first silicon particles is 102.4.

### Comparative example 4

This comparative example was carried out with reference to Example 1, except that no carbon nanotubes were added.

### Comparative example 5

This comparative example was carried out with reference to Example 1, except that no polymer material was added.

### Preparation example

Batteries were prepared using the negative electrode plates obtained from the examples and comparative examples, respectively, according to the method described below.

### (1) Positive electrode plate

A positive electrode active material of lithium cobalt oxide (LCO), a binder of polyvinylidene fluoride (PVDF), and a conductive agent of acetylene black were mixed in a weight ratio of 97.6 : 1.2 : 1.2, N-methylpyrrolidone (NMP) was added, and the mixture was stirred under the action of a vacuum mixer until the mixed system became a positive electrode slurry with uniform flowability. The positive electrode slurry was uniformly coated onto a positive electrode current collector of an aluminium foil. The coated aluminium foil above was baked in an oven configured with five-stage temperature gradients, and then dried in an oven at 120°C for 8 h, followed by rolling and slitting to obtain the desired positive electrode plate. The positive electrode plate had a single-sided areal density of 13.7 mg/cm², and a compacted density of 4.15 g/cm².

### (2) Negative electrode plate

The negative electrode plates obtained from the examples and comparative examples described above were used, respectively.

### (3) Electrolyte

In a glove box filled with an inert gas (argon) (H₂O < 0.1 ppm, and O₂ < 0.1 ppm), carbonate solvents (ethylene carbonate, propylene carbonate, and diethyl carbonate, in a mass ratio of 1 : 1 : 1), and carboxylate solvents (propyl propionate and ethyl propionate, in a mass ratio of 1 : 1) were mixed until uniform, and then a 1.25 mol/L fully-dried lithium hexafluorophosphate (LiPF₆) was rapidly added thereto, dissolved in the non-aqueous organic solvent and stirred until uniform; and after passing the moisture and free acid tests, the electrolyte was obtained.

### (4) Separator

An 8 µm thick coated polyethylene separator was used.

### (5) Preparation of lithium-ion battery

The positive electrode plate in step (1), the separator in step (4), and the negative electrode plate in step (2) were sequentially stacked to ensure that the separator was between the positive electrode plate and the negative electrode plate and functioned for isolation, and then wound to obtain an un-injected bare cell. The bare cell was placed into an outer packaging foil, and the electrolyte from step (3) was injected into the dried bare cell, followed by processes including vacuum sealing, leaving to stand, formation, shaping, sorting, etc., to fabricate a lithium-ion battery.

### Test examples

The batteries obtained in the examples and comparative examples were tested as follows.

### (1) Cycling test at 25°C

Batteries at 50% SOC after an OCV test were measured for their voltage, internal resistance, and thickness T1. The batteries were then left to stand in an environment at (25±3)°C for 3 hours until the battery body reached (25±3)°C. The batteries were charged at a constant current of 3 C to 4.2 V, then charged at a constant current of 0.7 C to 4.5 V, then charged at the constant voltage with a cut-off current of 0.05 C, and then discharged at 0.5 C to 3 V. The batteries were subjected to 100/200/300/400/500 charge-discharge cycles, and the discharge capacities after 100/200/300/400/500 cycles were recorded, respectively. The capacity retention rate after 100/200/300/400/500 cycles was calculated by dividing the discharge capacity after 100/200/300/400/500 cycles by the discharge capacity of the first cycle. For example, if the discharge capacity of the first cycle was Q1 and the discharge capacity after 500 cycles was Q500, then the capacity retention rate after 500 cycles = Q500/Q1 × 100%. The capacity retention rates after 500T cycles of the batteries were recorded.

A 0.2 C discharge was performed every 100 cycles for low-rate capacity recovery. After the completion of 100/200/300/400/500 cycles, the fully charged batteries were removed from the constant-temperature box at 25°C, and their fully charged thicknesses after 100/200/300/400/500 cycles were tested immediately. The thickness expansion rates after 100/200/300/400/500 cycles were calculated, respectively. For example, if the fully charged thickness after 500 cycles was T500, then the thickness expansion rate (%) = (T500 - T1)/T1 × 100%. The expansion rates after 500T cycles of the batteries were recorded. After the cycling process, the batteries were disassembled in their fully charged state to inspect the status of lithium plating. When there was no lithium plating, the surface of the negative electrode plate exhibited a golden-yellow colour after lithium intercalation. However, when the battery exhibited high impedance or poor kinetics, lithium plating occurred. In such cases, the edges or localized small areas of the negative electrode plate turned grey or black, resulting from the oxidation of the plated lithium. In cases of severe lithium plating, large areas of the negative electrode plate turned grey or black. Therefore, the observation results were defined as follows: if the surface of the negative electrode plate remained golden-yellow, it was recorded as "no lithium plating"; if the edges or localized small areas of the negative electrode plate turned grey or black, it was recorded as "lithium plating"; and if large areas of the negative electrode plate turned grey or black, it was recorded as "severe lithium plating".

### (2) Cycling test at 45°C

Batteries at 50% SOC after an OCV test were measured for their voltage, internal resistance, and thickness M1. The batteries were then left to stand in an environment at (45±3)°C for 3 hours until the battery body reached (45±3)°C. The batteries were charged at a constant current of 3 C to 4.2 V, then charged at a constant current of 0.7 C to 4.5 V, then charged at the constant voltage with a cut-off current of 0.05 C, and then discharged at 0.5 C to 3 V. The batteries were subjected to 100/200/300/400/500 charge-discharge cycles, and the discharge capacities after 100/200/300/400/500 cycles were recorded, respectively. The capacity retention rate after 100/200/300/400/500 cycles was calculated by dividing the discharge capacity after 100/200/300/400/500 cycles by the discharge capacity of the first cycle. For example, if the discharge capacity of the first cycle was P1 and the discharge capacity after 500 cycles was P500, then the capacity retention rate after 500 cycles = P500/P1 * 100%. The capacity retention rates after 500T cycles of the batteries were recorded. After the cycling process, the batteries were disassembled in their fully charged state to inspect the status of lithium plating. When there was no lithium plating, the surface of the negative electrode plate exhibited a golden-yellow colour after lithium intercalation. However, when the battery exhibited high impedance or poor kinetics, lithium plating occurred. In such cases, the edges or localized small areas of the negative electrode plate turned grey or black, resulting from the oxidation of the plated lithium. In cases of severe lithium plating, large areas of the negative electrode plate turned grey or black. Therefore, the observation results were defined as follows: if the surface of the negative electrode plate remained golden-yellow, it was recorded as "no lithium plating"; if the edges or localized small areas of the negative electrode plate turned grey or black, it was recorded as "lithium plating"; and if large areas of the negative electrode plate turned grey or black, it was recorded as "severe lithium plating".

A 0.2 C discharge was performed every 100 cycles for low-rate capacity recovery. After the completion of 100/200/300/400/500 cycles, the fully charged batteries were removed from the constant-temperature box at 45°C, and their fully charged thicknesses after 100/200/300/400/500 cycles were tested immediately. The thickness expansion rates after 100/200/300/400/500 cycles were calculated, respectively. For example, if the fully charged thickness after 500 cycles was M500, then the thickness expansion rate (%) = (M500 - M1)/M1 × 100%. The expansion rates after 500T cycles of the batteries were recorded.

### (3) Oven test at 132°C

At an ambient temperature of 25°C ± 5°C, the batteries were discharged at 0.2 C to the lower limit voltage and then left to stand for 10 min. The batteries were then charged at 0.7 C to the upper limit voltage with a cut-off current of 0.05 C. At an ambient temperature of 25°C ± 5°C, The voltage, internal resistance, and thickness of batteries at a fully charged state were measured, and pre-test photos were taken. The fully charged batteries were placed in an oven and heated at a heating rate of 5 ± 2°C/min, and when the internal temperature of the oven reached 132°C ± 2°C, the temperature was kept constant for 60 min. Three batteries per group were tested. The batteries were observed from the beginning to the end of the test for any signs of fire or explosion, which served as the pass/fail criteria for the oven test. The result was judged as Pass if no fire or explosion occurred; otherwise, it was judged as Fail. The results were expressed as "the number of Pass/the number of tests". For example, "3/3" indicated that all 3 out of 3 tests were Pass, and "1/3" indicates that 1 out of 3 tests was Pass.

The results obtained are recorded in Table 2.

**Table 2**

| | Capacity retention rate after 500T cycles at room temperature | Cell expansion rate after 500T cycles at room temperature | Capacity retention rate after 500T cycles at high temperature | Cell expansion rate after 500T cycles at high temperature | Oven test result | Lithium plating status after 500T cycles at room temperature (disassembled at full charge) | Lithium plating status after 500T cycles at high temperature (disassembled at full charge) |
|---|---|---|---|---|---|---|---|
| Example 1 | 85.6% | 7.2% | 84.8% | 8.8% | 3/3 | No lithium plating | No lithium plating |
| Example 2a | 84.3% | 8.2% | 83.6% | 9.6% | 3/3 | No lithium plating | No lithium plating |
| Example 2b | 84.1% | 8.7% | 82.1% | 9.8% | 3/3 | No lithium plating | No lithium plating |
| Example 2c | 82.1% | 9.2% | 81.0% | 10.9% | 3/3 | Lithium plating | No lithium plating |
| Example 2d | 82.2% | 9.1% | 81.2% | 10.8% | 3/3 | No lithium plating | No lithium plating |
| Example 2e | 79.1% | 9.8% | 77.9% | 11.8% | 3/3 | Lithium plating | No lithium plating |
| Example 3a | 85.4% | 7.5% | 84.7% | 9% | 3/3 | No lithium plating | No lithium plating |
| Example 3b | 83.2% | 8.3% | 82.1% | 9.8% | 3/3 | No lithium plating | No lithium plating |
| Example 3c | 85.1% | 7.7% | 84.5% | 9.1% | 3/3 | No lithium plating | No lithium plating |
| Example 3d | 84.2% | 7.9% | 83.4% | 9.4% | 3/3 | No lithium plating | No lithium plating |
| Example 4a | 84.1% | 9.9% | 84.1% | 9.7% | 3/3 | Lithium plating | No lithium plating |
| Example 4b | 85.9% | 8.2% | 85.1% | 8.9% | 3/3 | No lithium plating | No lithium plating |
| Example 5a | 82.4% | 8.5% | 81.1% | 9.6% | 3/3 | No lithium plating | No lithium plating |
| Example 5b | 85.9% | 7% | 84.9% | 8.6% | 3/3 | No lithium plating | No lithium plating |
| Example 6a | 84.8% | 8.4% | 84.1% | 9.6% | 3/3 | No lithium plating | No lithium plating |
| Example 6b | 85.4% | 7.7% | 84.2% | 9.3% | 3/3 | No lithium plating | No lithium plating |
| Example 6c | 81.6% | 10.2% | 77.8% | 11.8% | 3/3 | No lithium plating | No lithium plating |
| Example 7a | 83.1% | 8.9% | 81.1% | 10.4% | 3/3 | No lithium plating | No lithium plating |
| Example 7b | 82.2% | 9.6% | 80% | 11.2% | 3/3 | No lithium plating | No lithium plating |
| Example 8a | 78.6% | 10.6% | 76.1% | 12.9% | 2/3 | No lithium plating | No lithium plating |
| Example 8b | 81.4% | 9.5% | 80.2% | 11.1% | 3/3 | No lithium plating | No lithium plating |
| Example 9a | 83.4% | 8.1% | 82.1% | 9.7% | 3/3 | No lithium plating | No lithium plating |
| Example 9b | 84.8% | 7.5% | 84.1% | 9.1% | 3/3 | No lithium plating | No lithium plating |
| Example 9c | 82.9% | 8.2% | 82.3% | 9.8% | 3/3 | No lithium plating | No lithium plating |
| Example 9d | 80.9% | 8.3% | 79.3% | 9.9% | 3/3 | No lithium plating | No lithium plating |
| Example 9e | 80.7% | 8.1% | 79.1% | 9.5% | 3/3 | No lithium plating | No lithium plating |
| Example 9f | 79.8% | 8.0% | 78.3% | 9.2% | 3/3 | No lithium plating | No lithium plating |
| Example 10a | 80.6% | 7% | 79.1% | 8.3% | 3/3 | Lithium plating | No lithium plating |
| Example 10b | 85.9% | 7.4% | 85.4% | 9.1% | 3/3 | No lithium plating | No lithium plating |
| Example 11 | 78.1% | 9.6% | 77.4% | 10.4% | 3/3 | Lithium plating | No lithium plating |
| Example 12 | 81.5% | 9.9% | 80.6% | 10.8% | 3/3 | No lithium plating | No lithium plating |
| Example 13 | 84.2% | 7.1% | 82.7% | 8.5% | 3/3 | No lithium plating | No lithium plating |
| Example 14a | 84.1% | 8.1% | 82.7% | 9.5% | 3/3 | No lithium plating | No lithium plating |
| Example 14b | 83.2% | 8.3% | 81.4% | 9.9% | 3/3 | No lithium plating | No lithium plating |
| Example 14c | 81.6% | 9.1% | 80.1% | 10.6% | 3/3 | No lithium plating | No lithium plating |
| Comparative example 1 | 77.1% | 11.4% | 75.9% | 13.4% | 0/3 | No lithium plating | No lithium plating |
| Comparative example 2 | 78.4% | 10% | 77.2% | 12.2% | 1/3 | Lithium plating | No lithium plating |
| Comparative example 3 | 70.2% | 13.1% | 72.2% | 14.9% | 2/3 | Severe lithium plating | Severe lithium plating |
| Comparative example 4 | 60.2% | 6.1% | 52.1% | 7.9% | 1/3 | Severe lithium plating | Lithium plating |
| Comparative example 5 | 66.6% | 15.1% | 62.2% | 17.5% | 1/3 | Lithium plating | No lithium plating |

As can be seen from Table 2, comparing the comparative examples with the examples reveals that batteries prepared using the negative electrode plates of the examples exhibit significantly higher capacity retention rates and markedly lower cell expansion rates during both room-temperature and high-temperature cycling. Furthermore, the lithium plating status during cycling at room temperature and high temperature conditions is improved, along with improved oven test performance. These results indicate that for the negative electrode plate and the battery comprising the negative electrode plate of the present invention, the adverse effects of the volume changes of silicon particles in the graphite-silicon blended system were overcome by changing the structure of the negative electrode plate, thereby reducing the expansion rate of the battery, and improving the cycling stability and safety performance of the battery.

The preferred embodiments of the present invention have been described in detail above; however, the present invention is not limited thereto. Within the technical concept of the present invention, various simple modifications can be made to the technical solution of the present invention, including the combination of various technical features in any other suitable way. These simple modifications and combinations should also be regarded as the content disclosed by the present invention and all fall within the scope of protection of the present invention.

## Claims

1. A negative electrode plate, **characterized in that** the negative electrode plate comprises a negative electrode current collector, a first coating on the surface of one or both sides of the negative electrode current collector, and a second coating on the surface of the first coating, wherein the first coating comprises first silicon particles and a coating layer on the surface of the first silicon particles; the coating layer comprises a polymer material, carbon nanotubes, and a first conductive agent; and a ratio R of a centre-to-centre distance of the adjacent first silicon particles to a median particle size Dv50 of the first silicon particles is (0.01-100) : 1.

2. The negative electrode plate according to claim 1, **characterized in that** the ratio R of the centre-to-centre distance of the adjacent first silicon particles to the median particle size Dv50 of the first silicon particles is (0.1-10) : 1; and/or
the centre-to-centre distance of the adjacent first silicon particles is 0.05 µm - 2000 µm; and/or
the median particle size Dv50 of the first silicon particles is 5 µm - 20 µm.

3. The negative electrode plate according to claim 1 or 2, **characterized in that** the carbon nanotubes have a tube diameter of 0.5 nm - 40 nm, and/or the carbon nanotubes have a length of 1 µm - 40 µm, and/or the carbon nanotubes have a length-to-diameter ratio of 25-80000; and/or
the polymer material comprises one or more of a butadiene-styrene polymer, a polystyrene-acrylate polymer, an acrylate polymer, a polydimethylsiloxane, a polyurethane, and a polyacrylic acid-acrylonitrile copolymer.

4. The negative electrode plate according to any one of claims 1-3, **characterized in that** the first silicon particles comprise one or more of silicon-carbon particles, silicon-oxygen particles, and nanosilicon particles.

5. The negative electrode plate according to any one of claims 1-4, **characterized in that** the first conductive agent has a porous structure; and/or
the first conductive agent has a specific surface area of 1 m²/g - 5000 m²/g, preferably 5 m²/g - 1000 m²/g; and/or
the first conductive agent comprises one or more of conductive carbon black, conductive graphite, carbon fibres, and graphene.

6. The negative electrode plate according to any one of claims 1-5, **characterized in that** the coating layer further comprises a first dispersant, and based on the total weight of the first coating, the content by weight of the first silicon particles is 10 wt% - 90 wt%, the content by weight of the polymer material is 2 wt% - 60 wt%, the content by weight of the carbon nanotubes is 0.05 wt% - 20 wt%, the content by weight of the first conductive agent is 0.5 wt% - 50 wt%, and the content by weight of the first dispersant is 0.5 wt% - 45 wt%.

7. The negative electrode plate according to claim 6, **characterized in that** the first dispersant comprises one or more of sodium carboxymethylcellulose, sodium polyacrylate, sodium alginate, lithium carboxymethylcellulose, polyacrylic acid, polyacrylamide, polyvinyl alcohol, a polyacrylic acid-acrylamide copolymer, a polyvinyl alcohol-acrylic acid copolymer, a polyacrylic acid-acrylonitrile copolymer, and a polyacrylic acid-acrylonitrile-acrylamide copolymer.

8. The negative electrode plate according to any one of claims 1-7, **characterized in that** the second coating comprises a second active material, and optionally second silicon particles, and the second active material comprises one or both of graphite particles and hard carbon particles.

9. The negative electrode plate according to claim 8, **characterized in that** the second active material has a median particle size Dv50 of 1 µm - 30 µm, preferably 4 µm - 25 µm; and/or
the second silicon particles have a median particle size Dv50 of 5 µm - 20 µm; and/or
the second silicon particles comprise one or more of silicon-carbon particles, silicon-oxygen particles, and nanosilicon particles.

10. The negative electrode plate according to claim 4 or 9, **characterized in that** the silicon-oxygen particles comprise a substance having a chemical formula of MₐSi_{b}Oₓ, where 0 ≤ a < 5, 0 ≤ b < 3, 0 ≤ x ≤ 2, and M comprises one or both of Li and Mg; and/or
the silicon-oxygen particles contain an amorphous carbon coating layer on the surface thereof; and/or
the silicon-carbon particles comprise particles formed by mixing silicon or partially oxidized silicon with amorphous or crystalline carbon; and/or
the silicon-carbon particles comprise particles formed by filling pores of porous amorphous carbon or porous crystalline carbon with silicon or partially oxidized silicon.

11. The negative electrode plate according to any one of claims 8-10, **characterized in that** the second coating further comprises a second conductive agent, a binder, and a second dispersant, and based on the total weight of the second coating, the content by weight of the second active material is 70 wt% - 98 wt%, the content by weight of the second silicon particles is 0 wt% - 5 wt%, the content by weight of the second conductive agent is 0 wt% - 20 wt%, the content by weight of the binder is 0.5 wt% - 20 wt%, and the content by weight of the second dispersant is 0.2 wt% - 20 wt%.

12. The negative electrode plate according to claim 11, **characterized in that** the second conductive agent comprises one or more of conductive graphite, carbon fibres, conductive carbon black, carbon nanotubes, and graphene.

13. The negative electrode plate according to any one of claims 1-12, **characterized in that** the negative electrode plate has an areal density of 1-15 mg/cm², preferably 4-11 mg/cm²; and/or
the negative electrode plate has a compacted density of 1-2 g/cm³, preferably 1.6-1.8 g/cm³.

14. The negative electrode plate according to any one of claims 1-13, **characterized in that** the first coating has a thickness d1 of 0.1 µm - 50 µm, preferably 1 µm - 40 µm; and/or
the second coating has a thickness d2 of 5 µm - 100 µm, preferably 10 µm - 80 µm; and/or
the thickness d2 of the second coating is greater than the thickness d1 of the first coating; and/or
the first coating has a flatness β of 4 µm - 30 µm.

15. A battery, **characterized by** comprising the negative electrode plate according to any one of claims 1-14.
